# EUROPEAN PATENT APPLICATION

(11) **EP 4 686 884 A1**
(43) Date of publication of application: **04.02.2026**
(21) Application number: 24192536.1
(22) Date of filing: 02.08.2024
(51) Int. Cl.: F24D 19/10, F24H 1/18, F24H 4/04, G05B 9/03, G05B 15/02, G05D 23/19, H01H 47/00, F24H 15/443

(54) **CONTROL SYSTEM FOR CONTROLLING AT LEAST ONE WATER HEATING AND/OR COOLING INSTALLATION**

(71) Applicant: BDR Thermea Group B.V., 7332 BD Apeldoorn (NL)
(72) Inventor: MASSEIN, Aurélien, 7332 BD Apeldoorn (NL)
(74) Representative: Grabovac, Dalibor

(57) **Abstract**

The present invention relates to a control system (10) for controlling at least a water heating and/or cooling installation (12), the control system (10) comprising a determination device (14) configured for determining a parameter relating to the water heating and/or cooling installation (12), wherein the control system (10) comprises at least two controllers configured to control the water heating and/or cooling installation (12), including at least a first controller (20) configured to control the water heating and/or cooling installation (12) during a first time period (Δt1), and at least a second controller (22) configured to be operable to control the water heating and/or cooling installation (12) during a second time period (Δt2) following the first time period (Δt1), and a selection module (24), configured to selectively set active the second controller (22) to control the water heating and/or cooling installation (12) during the second time period (Δt2).

## Description

The present disclosure relates to a control system for controlling at least one water heating and/or cooling installation.

Heating and/or cooling of water in buildings, such as heating or cooling of water of a central heating and/or cooling system or heating of water for domestic use, may be accomplished by means of water heating and/or cooling installations including a heat pump or heat pump system. Such a water heating and/or cooling installation can also be called a thermal installation. Such a heat pump system may either be a water source, for example ground source to water heat pump (GSHP) system or an air source to water heat pump (AWHP) system. In a GSHP system, calories are exchanged between the ground and the water. The calories in the ground may be extracted by capturing calories in a water table or by circulating a water-based circuit in the ground or from any suitable water source. In an AWHP system calories are exchanged between the air and the water. The water to which the calories withdrawn from the water or from the air is transferred to water which is typically stored in a water tank. Such a heat pump system can also comprise a reversible heat pump and or be a reversible heat pump system, wherein the reversible heat pump or heat pump system allows for heating and/or cooling, e.g. by way of floor cooling. In other words, a reversible heat pump system can both heat and cool a space by interchanging the role of each heat exchanger. The water heating and/or cooling installation can comprise at least one heat pump or heat pump system and/or an electrical backup heater and/or a gas heating device, and/or a wood-based heating device and/or any other suitable heating and/or cooling device, such as a PV module or the like.

Such water and/or cooling heating installations need to be controlled and are thus equipped with a control system. Just as an example of one control task, the temperature of the water inside the water tank, or of the water inside a primary or secondary or any further circuit of the water heating and/or cooling installation for domestic hot water, or for heating or cooling of a building, can be determined by a respective internal temperature sensor and the temperature outside the water tank, can be determined by an external temperature sensor and/or online temperature data, the values received by the respective temperature sensor are interpreted with reference to
a) a heating demand or domestic water heating requirement and/or
b) in case a more than one heating and/or cooling device is available which heating and/or cooling device to use and how many calories to ask from the respective heat device to deliver the heating demand.

Control systems are typically equipped with only one general controller. This one general controller has to process information received from multiple sensors which leads to a relatively high complexity for just one controller which reduces the robustness, performance and reliability of this one general controller. In addition, the complexity of the control tasks is constantly increasing such that also the risk of bugging or errors such as giving false values, malfunctioning or no longer working, is increasing. Bugging or errors may lead to reduced performance up to malfunction of the heating and/or cooling device which may cause for example energy overconsumption and/or thermal discomfort for the end-user.

It is one object of the present invention to provide a water heating and/or cooling installation system which has an optimized response, robustness, performance and improved reliability with regard to the increasing complexity of tasks of the water heating and/or cooling installation.. In particular, the reliability of control systems of the water heating and/or cooling installations should be increased thereby reducing, preferably avoiding energy overconsumption and/or thermal discomfort for the end-user.

The objective is solved by the features specified in claim 1. Advantageous embodiments are the subject of the dependent claims and are described herein.

According to one aspect of the present invention the control system for controlling at least one water heating and/or cooling installation comprises
- a determination device, in particular a sensor, configured for determining a parameter relating to the water heating and/or cooling installation,
- the control system further comprising
- at least two controllers configured to control the water heating and/or cooling installation, including
   o at least a first controller configured to control the water heating and/or cooling installation during a first time period, and
   o at least a second controller configured to be operable to control the water heating and/or cooling installation during a second time period following the first time period, and
   o a selection module, configured to selectively set active the second controller to control the water heating and/or cooling installation during the second time period.

The use of at least two controllers in the control system provides a certain redundancy. In case the first controller does not work properly anymore, the selection module can select and set active the second controller. In addition, the control system according to the invention allows for the control system to allocate tasks to the respective controller better suited for the respective task based for example on the complexity of the task and allows to switch between e,g, a more advanced controller for a complex task requiring e.g. more information for performing the task and a less demanding, or standard controller can be chosen if a less demanding task can be performed by the less demanding controller.

In the first time period, which may last up to 1 to 2 weeks, but can be set shorter or longer, usage data of the water heating and/or cooling installation may be collected using the first controller, while during the second time period, the collected data is exploited to improve for example the energy savings of the water heating and/or cooling installation using the second controller. When the water heating and/or cooling installation is activated, the first controller is typically used as default.

The selection module may be a separate hardware component; however, it may be implemented by software that can be executed on the control system. Also, the selection module can be on the same hardware or in a different software or hardware as the first controller and the second controller. Remote control in the cloud or in another devices or boards can thereby be implemented. The components of the control system can be hardware, software, virtual, distributed, cloud-based, etc.

Examples of parameters that can be determined may be parameters of a function, and/or physical parameters of the product For example, this may include, but is not limited to, a source, destination or refrigerant fluid temperature or pressure, flow rate, energy, or information or operating state of the system, such as the system characteristics or as the instantaneous or consumed power of the compressor.

According to another embodiment the second controller operates in a learning mode, in which the second controller monitors but does not control the operation of the water heating and/or cooling installation, at least during the first time period. A learning mode is a setting which allows the controller to learn from e.g. user interactions or data imports and/or inputs to improve the performance of the water heating and/or cooling installation or user experience. One example of a learning mode is the adjustment and/or optimization of an algorithm based on newly available information, e.g. in the context of machine learning. A learning mode can also be an adaptive learning mode in which the algorithm and thereby the performance of the heating installation is adapted to the user's behavior, preferences or changes in the environment. These inputs are used to tailor the response and/or functions of the water heating and/or cooling installation. Another example is a machine learning mode integration in check machine learning models enable the processing and analyzing of data to make predictions and/or tailor responses and/or functions to the resulting data set. The goal of such a learning mode is to enhance the user experience by making the controls software more intuitive and responsive to individual needs or circumstances. As mentioned, in the first period, data regarding the operation of the water heating and/or cooling installation is collected, while in the second period the second controller analyzes the data. In this embodiment, the second controller is already activated in the first period and monitors the operation of the water heating and/or cooling installation but is not set active. The analysis of the collected data in the second period can be at least partially prepared in the first period leading to a better performance. The learning mode can involve the usage of a neuronal network that is taught during the first period by the data collected.

In a further embodiment the second controller further comprises a memory configured to record information relating to the operation of the water heating and/or cooling installation at least while operating in the learning mode. The term "memory" is often synonymous with the terms RAM, main memory, or primary storage. The recording of the determined parameters over time can be used to identify certain patterns e.g., in the heating demand. As an example, a high heating demand may be recorded in the morning hours of workdays between 6:00h and 7:00h. The control system may anticipate such heating demands and thus find an optimal way how to fulfill the heating demand with minimum energy consumption. Moreover, as mentioned earlier, a neuronal network may be used for the learning mode. The data collected in the first period may be used for training the neuronal network and for testing the reaction of the neuronal network at other boundary conditions. The respective data can be copied and manipulated when it is recorded in a memory.

In another embodiment the second controller further monitors the operation of the first controller at least while operating in the learning mode. In this embodiment not only the operation of the water heating and/or cooling installation is monitored but also the operation of the first controller. Thus, the second controller may learn about the way the first controller steers the water heating and/or cooling installation and also identify less optimal commands, thereby improving its own performance.

For example, the second controller will be able to identify whether the system is operating optimally in relation to the commands sent to the first and/or the second controller. The second controller can for example identify that a significant volume of hot water has been requested by the first controller and produced by the system long before it is consumed by the user. This leads to heat loss and a drop in the system's energy performance. On the basis of this information, the second controller can identify that it leads to an improved performance to shift the heating control and/or adjust the temperature to match the user's consumption.

On the other hand, the second controller, based on the various system measurements (temperature, pressure, etc.), can determine that during the learning mode, there was a risk of the user running out of hot water at a certain time. The second controller can then identify these risks and the associated parameters (timings, external conditions, etc.) and apply corrective measures, such as launching a second heating element or adjusting the power of the heat pump if there is a risk of a shortage of hot water.

Additionally or alternatively, the second controller can use the analysis of system performance and requests from the first controller to identify specific periods or parameters that have resulted in above-average efficiency. The second controller can learn from the history of the water heating and/or cooling installation to implement preventive heating, in other words reduction of energy wastage, when these conditions are met (for example specific range of temperature or humidity values, or specific time slot, etc.). For example, this could involve heating at times of day when the temperature or humidity (even if not measured) of the source is particularly suitable, etc. In an embodiment second controller monitors the first controller in view of the responsiveness to individual needs of the user. In an example to elucidate the principle, the user has the habit of taking a bath or using water inside the dwelling at some time during the day. If the energy source of the heating system is at least partly the air in this dwelling itself, the performance of the water heating and/or cooling installation will be improved during this period and less energy will be used compared to not adapting the water heating and/or cooling installation. It is a known fact that humid air provides a better energy supply than dry air for a heat pump. Therefore, even if humidity is not a parameter measured by the water heating and/or cooling installation and the product has no way of knowing the cause of a particularly high performance, the second controller will be able to identify these periods thanks to the heating history built up by the first controller, and will therefore prefer these periods to start heating.

It may also be a case of learning, on the basis of regular orders from a user for the product, about particular uses which could lead the second controller to integrate this request and carry it out automatically. For example, the second controller may note that the user tends to apply a silence and/or boost and/or energy reduction mode during a regular time slot (at night, at weekends, on a particular day of the week, etc.) and automate this request. So, for example, if a user is bothered during the learning phase by the noise generated by the product in the evenings, and over time started to put the product in silent mode, the second controller will be able to optimize the heating profile of the heat pump system so as not to generate noise in the evening by modifying the heating periods.

A further embodiment requires that the selection module selectively sets active the second controller to control the water heating and/or cooling installation during the second time period based, at least in part, on a request, on a user setting, on a preference, on a parameter, on the information recorded in the learning mode, and/or on a predicted performance measure of the water heating and/or cooling installation when using the second controller. In this embodiment the second controller is set active based on meaningful and comprehensible criteria.

One application is to handle the restart of the water heating and/or cooling installation and the possibility to automatically be on the second controller if certain conditions are met, likely data sufficiency and a below maximum deactivation time. Thus, there is no need to use the first controller at a restart.

A further embodiment requires that the water heating and/or cooling installation further comprises a thermostat. Within the present description, a thermostat can be understood as a regulating element to identify when heat is needed. In particular, it can be an element that determines when the temperature of the environment is outside the set point ranges. For example, when the temperature of the water in the system is lower than the set temperature and the tolerance range (called hysteresis), the thermostat determines that the water heating and/or cooling installation should be operated. The thermostat thus sets the heating demand which is a very important control variable for the operation of the water heating and/or cooling installation.

According to another embodiment at least the selection module operates on the thermostat. The operation of the water heating and/or cooling installation may usually be controlled e.g., by the power of the compressor of a heat pump or other components that are involved in the transfer of calories into the water to be heated. When the selection module operates on the thermostat, another way of controlling the water heating and/or cooling installation is available. The setting of the end-user may be overridden by the control system in case the setting leads to a disadvantageous operating condition.

According to another embodiment the thermostat includes the first controller and/or the second controller. As a thermostat is needed anyway, the integration of the first controller and/or the second controller leads to a compact assembly group.

In another embodiment, the selection module selectively sets active the second controller to control the water heating and/or cooling installation during the second time period based, at least in part, on a setting from the thermostat. As mentioned above, the end-user can set the thermostat according to his or her preferences. In this embodiment, the setting from the thermostat is considered when the second controller is set active. Thus, the preferences of the end-user are matched.

In another embodiment the control system comprises a performance testing module, the performance testing module configured to determine a first performance measure of the water heating and/or cooling installation during the first time period, to determine a second performance measure of the water heating and/or cooling installation during the second time period, and to determine a comparative performance that compares the first performance measure to the second performance measure.

The performance measure may be based on measured information of the operation the first controller and/or the second controller, but also the determination from information based on simulations and estimations to predict its possible performance and also to improve the performance in particular of the second controller.

In another embodiment, the determination device is a sensor, in particular a temperature, flow or pressure sensor for the determination of the temperature or pressure of the water in the water heating and/or cooling installation, the energy source and/or the fluid circulating inside the water heating and/or cooling installation.

In an advantageous embodiment a water heating and/or cooling installation comprises an inventive control system.

The present invention is described in detail with reference to the drawings attached wherein
- Figure 1: shows an inventive embodiment of a control system for controlling a water heating and/or cooling installation,
- Figure 2: is a graphical representation of the way the control system can operate the water heating and/or cooling installation,
- Figure 3: a water heating and/or cooling installation that comprises the control system shown in Figure 1, both Figures showing principle drawings.

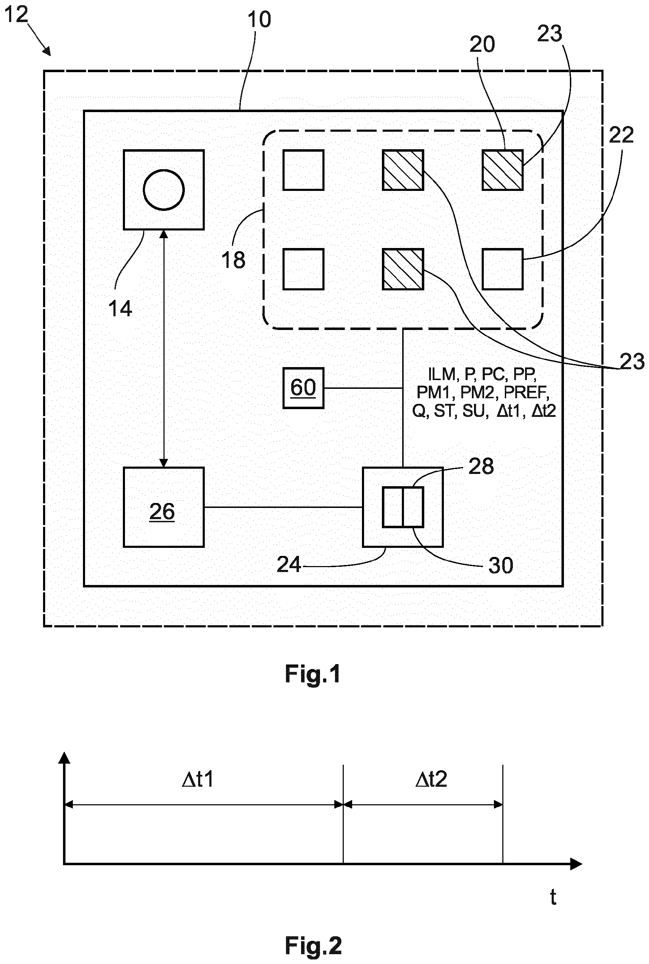

Figure 1 shows an embodiment of a control system 10 according to the present invention which is used for controlling at least one water heating and/or cooling installation 12 (see also Figure 1). The control system 10 comprises a determination device 14 which may be provided with a sensor (not shown), configured for determining parameter P relating to the water heating and/or cooling installation 12. Moreover, the control system 10 is equipped with a thermostat 18 by which an end-user of the water heating and/or cooling installation 12 can input the heating demand. The thermostat 18 comprises a plurality of controllers, each controller of the thermostat 18 configured to control the water heating and/or cooling installation 12. The thermostat 18 includes at least a first controller 20 and at least a second controller 22, and a selection module 24 configured to selectively set active a controller from the thermostat 18. The selection module 24 is configured to determine a set of activable controllers 23 from the thermostat 18, based, for example, on the determined parameter P.

The selection module 24 comprises two sub-modules, namely a first sub-module 28 configured to selectively set active a controller from the plurality of activable controllers 23, and a second sub-module 30 configured to determine the set of activable controllers 23 from the thermostat 18.

Moreover, the control system 10 is provided with a memory 26 configured to record the determined parameters P relating to the water heating and/or cooling installation 12. Furthermore, the control system 10 is equipped with a performance testing module 60 by which a first performance measure PM1 of the water heating and/or cooling installation 12 during a first time period Δt1 (see Figure 2) and a second performance measure PM2 of the water heating and/or cooling installation 12 during a second time period Δt2 can be determined. Moreover, a comparative performance PC can be determined by the performance testing module 60 by which the first performance measure PM1 is compared to the second performance measure PM2.

Figure 2 is a graphical representation of the way the control system may operate the water heating and/or cooling installation over time. In particular, the first time period Δt1 and the time period Δt2 are shown. Later, the way the water heating and/or cooling installation can be operated will be described in further detail with reference to Figure 2.

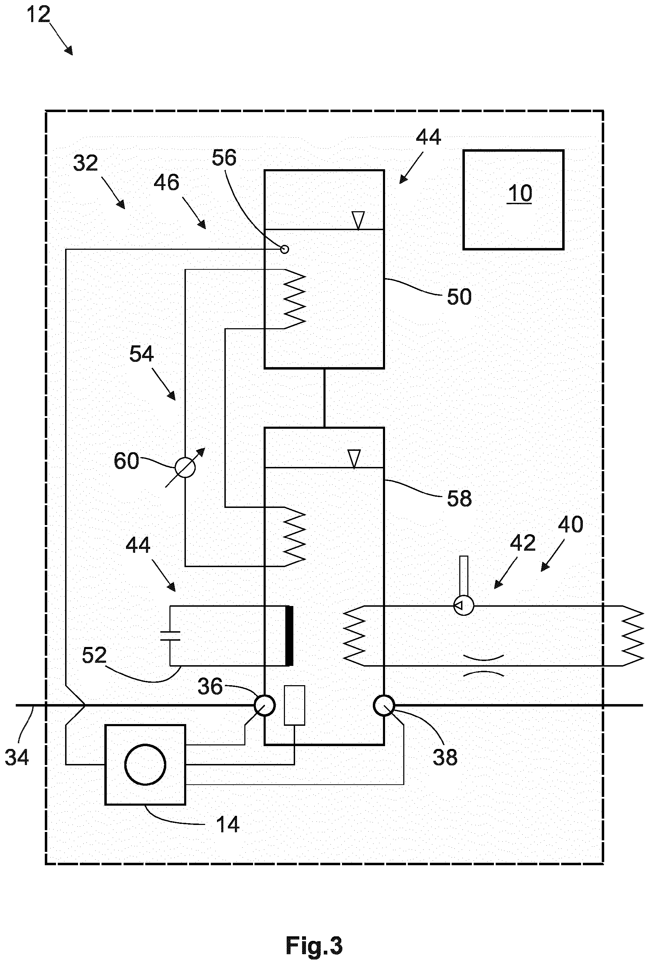

Figure 3 is a principle sketch of a water heating and/or cooling installation 12 that comprises a control system 10 as shown in Figure 1. The water heating and/or cooling installation 12 is equipped with a heating and/or cooling device 32 connected to a water distribution system 34 comprising a water inlet 36 and a water outlet 38 of a water tank 58. The determination device 14 comprises the determination device 14 by which temperature, volume, flowrate and/or energy and/or other parameters at the water inlet 36 and/or the water outlet 38 and/or inside the water tank 58 can be determined.

The water heating and/or cooling installation 12 also includes a heat pump 40 having a compressor 42 either of variable or fixed speed. The heat pump 40 transfers calories or heat from the exterior of the water heating and/or cooling installation 12 to water stored in the water tank 58.

The water heating and/or cooling installation 12 is further equipped with an additional heating and/or cooling system 46 that includes additional heating element 44 by which the water in the water tank 58 can be heated either in addition or instead of the heat pump 40. The additional heating element 44 may comprise an electrical heater 52 that can interact with the water in the water tank 58.

Beyond that the additional heating and/or cooling system 46 comprises a storage tank 50 where hot water can be stored. A heat exchanger 54 is in fluid communication with the water in the storage tank 50 and the water in the water tank 58. If needed, heat can be transferred from the water in the storage tank 50 to the water in the water tank 58 or vice versa. By means of an additional determination device 56, the temperature or other relevant parameter P of the water in the storage tank 50 can be determined. A pump 60 can be activated to transfer heat between the storage tank 50 and the water tank 58.

The water heating and/or cooling installation 12 can be operated as follows:
The end-user may input a desired heating demand using the thermostat 18. The water heating and/or cooling installation 12 may be switched on in reaction of this heating demand, thereby initiating the first time period Δt1 (see Figure 2). During the first time period Δt1 the water heating and/or cooling installation 12 is controlled by the first controller 20. The time period Δt1 is monitored by the selection module 24.

The control system 10 may be configured such that during the first time period Δt1, the second controller 22 monitors but does not control the operation of the water heating and/or cooling installation 12. During the first time period Δt1, the second controller 22 monitors the first controller 20. While monitoring, the second controller 22 can be operated in a learning mode. The information obtained by the second controller 22 while operating in the learning mode is recorded by the memory 26.

When the first time period Δt1 has lapsed, which may be the case after one or two weeks, the selection module 24 may set active the second controller 22 to control the water heating and/or cooling installation 12 during the second time period Δt2. The activation of the second controller 22 is not only triggered by the lapse of the first time period Δt1, but may depend on a request Q, on a user setting SU, on a preference PREF, on a parameter P, on the information recorded in the learning mode ILM, and/or on a predicted performance measure PP of the water heating and/or cooling installation 12 and on the setting ST from the thermostat 18 (see Figure 1).

The activation of the second controller 22 may additionally be supported by the performance testing module 60. The performance testing module 60 determines a first performance measure PM1 of the water heating and/or cooling installation 12 during the first time period Δt1 and a second performance measure PM2 of the water heating and/or cooling installation 12 during the second time period Δt2. By comparing the first performance measure PM1 to the second performance measure PM2, the performance testing module 60 determines a comparative performance PC which is considered in the activation of the second controller 22.

After the second time period Δt2 has lapsed, the control system 10 has a good knowledge on the performances of the first controller 20 and the second controller 22.

With reference to Figure 3, the temperatures of the water inside the water tank 58, at the water inlet 36 and the water outlet 38 can be determined by the determination device 14. These three temperatures and their change over time may be interpreted with reference to
a) a water heating requirement and/or
b) if the calories of the water in the water tank 58 are sufficient to satisfy the water heating requirement or if calories from the additional heating and/or cooling system are needed.

The selection moule 24 can now decide which one of the plurality of controllers 18 to use to fulfill the task a) and task b). To this end, the selection module 24 selectively set active the first controller 20 or the second controller 22 for example in consideration of the comparative performance PC.

### Reference list

- 10: Control system
- 12: water heating and/or cooling installation
- 14: determination device
- 18: thermostat
- 20: first controller
- 22: second controller
- 23: activable controller
- 24: selection module
- 26: memory
- 28: thermostat
- 30: performance testing module
- 28: first sub-module
- 30: second sub-module
- 32: heating and/or cooling device
- 34: water distribution system
- 36: water inlet
- 38: water outlet
- 40: heat pump
- 42: compressor
- 44: additional heating element
- 46: additional heating and/or cooling system
- 48: additional determination device
- 50: storage tank
- 52: electrical heater
- 54: heat exchanger
- 56: additional determination device
- 58: water tank
- 60: performance testing module

- Δt1: first time period
- Δt2: second time period

- ILM: information in the learning mode
- P: parameter
- PC: comparative performance
- PP: predicted performance
- PM1: first performance measure
- PM2: second performance measure
- PREF: preference
- Q: request
- ST: setting from thermostat

## Claims

1. Control system (10) for controlling at least a water heating and/or cooling installation (12), the control system (10) comprising
- a determination device (14) configured for determining a parameter relating to the water heating and/or cooling installation (12),
the control system (10) **characterized in that** the control system (10) comprises
- at least two controllers configured to control the water heating and/or cooling installation (12), including
o at least a first controller (20) configured to control the water heating and/or cooling installation (12) during a first time period (Δt1), and
o at least a second controller (22) configured to be operable to control the water heating and/or cooling installation (12) during a second time period (Δt2) following the first time period (Δt1), and
o a selection module (24), configured to selectively set active the second controller (22) to control the water heating and/or cooling installation (12) during the second time period (Δt2).

2. Control system (10) of claim 1,
**characterized in that** the second controller (22) operates in a learning mode, in which the second controller (22) monitors but does not control the operation of the water heating and/or cooling installation (12), at least during the first time period (Δt1).

3. Control system (10) of claim 2,
**characterized in that** the second controller (22) further comprises a memory (26) configured to record information relating to the operation of the water heating and/or cooling installation (12) at least while operating in the learning mode.

4. Control system (10) of claim 2 or claim 3,
**characterized in that** the second controller (22) further monitors the operation of the first controller (20) at least while operating in the learning mode.

5. Control system (10) of any one of the preceding claims,
**characterized in that** the selection module (24) sets active the second controller (22) to control the water heating and/or cooling installation (12) during the second time period (Δt2) based, at least in part, on a request (Q), on a user setting (SU), on a preference (PREF), on a parameter (P), on the information recorded in the learning mode (ILM), and/or on a predicted performance measure (PP) of the water heating and/or cooling installation (12) when using the second controller (22).

6. Control system (10) of any one of the preceding claims,
**characterized in that** the water heating and/or cooling installation (12) further comprises a thermostat (18).

7. Control system (10) of claim 6,
**characterized in that** at least the selection module (24) operates on the thermostat (18).

8. Control system (10) of claim 6 or claim 7,
**characterized in that** the thermostat (18) includes the first controller (20) and/or the second controller (22).

9. Control system (10) of any one of claims 6 through 8,
**characterized in that** the selection module (24) set active the second controller (22) to control the water heating and/or cooling installation (12) during the second time period (Δt2) based, at least in part, on a setting (ST) from the thermostat (18).

10. Control system (10) of any of the preceding claims, further comprising a performance testing module (60), the performance testing module (60) configured to determine a first performance measure (PM1) of the water heating and/or cooling installation (12) during the first time period (Δt1), to determine a second performance measure (PM2) of the water heating and/or cooling installation (12) during the second time period (Δt2), and to determine a comparative performance (PC) that compares the first performance measure (PM1) to the second performance measure (PM2).

11. Control system (10) of any of the preceding claims, **characterized in that** the determination device (14) is a sensor, in particular a temperature, flow or pressure sensor for the determination of the temperature or pressure of the water in the water heating and/or cooling installation (12), and/or the energy source and/or the fluid circulating inside the water heating and/or cooling installation (12).

12. Water heating and/or cooling installation, comprising a control system (10) according to any of claims 1 to 11.
